# EUROPEAN PATENT APPLICATION

(11) **EP 3 406 325 A1**
(43) Date of publication of application: **28.11.2018**
(21) Application number: 17172149.1
(22) Date of filing: 22.05.2017
(51) Int. Cl.: B01D 63/04, B01D 63/06, B01D 65/02, C02F 1/44

(54) **FILTER ASSEMBLY WITH FILLER CORE**

(71) Applicant: Siemens Aktiengesellschaft, 80333 München (DE)
(72) Inventor: Boland, Christian, 1447 Drøbak (NO); Hunter, Scott, 0172 Oslo (NO); Mehlen, Mari, 0591 Oslo (NO)
(74) Representative: Maier, Daniel Oliver

(57) **Abstract**

A filter assembly (200) for filtering fluid. The assembly defines a chamber (209) with an intake distribution region (250), a filtering region (252) and a filtered fluid outlet region (254). The filtering region (252) is defined by a core member (260), and the core member (260) extends from the intake distribution region (250) towards the filtered fluid outlet region (254). The core member (260) comprising a passage (262) which extends from a first side (264) of the core member (260), which faces the intake distribution region (250), to the second side (266) of the core member (260), which faces the filtered fluid outlet region (254). A filter element (213) for filtering fluid is mounted in the core member passage (262).

## Description

The present disclosure relates to a filter assembly.

In particular it relates to a filter assembly for filtering fluid as part of a filter system.

### Background

Often it is necessary to filter water to remove particulates. Filter apparatus may include filter elements for ultra fine filtration.

WO2015086303 describes such a filter system 100, from which Figure 1 is extracted. It includes a vessel 101 comprising a sidewall 103, an upper wall 105 and a lower wall 107 for enclosing an internal space 109. The vessel 101 further has a bottom port 111 which allows entry of fluid. The filter system 100 also has a top port 125 for allowing filtered water to leave the vessel 103, and a side port 127. A central bar 135 is arranged at a central longitudinal axis 137 of the vessel 101 for supporting plates 115, 117 and 119.

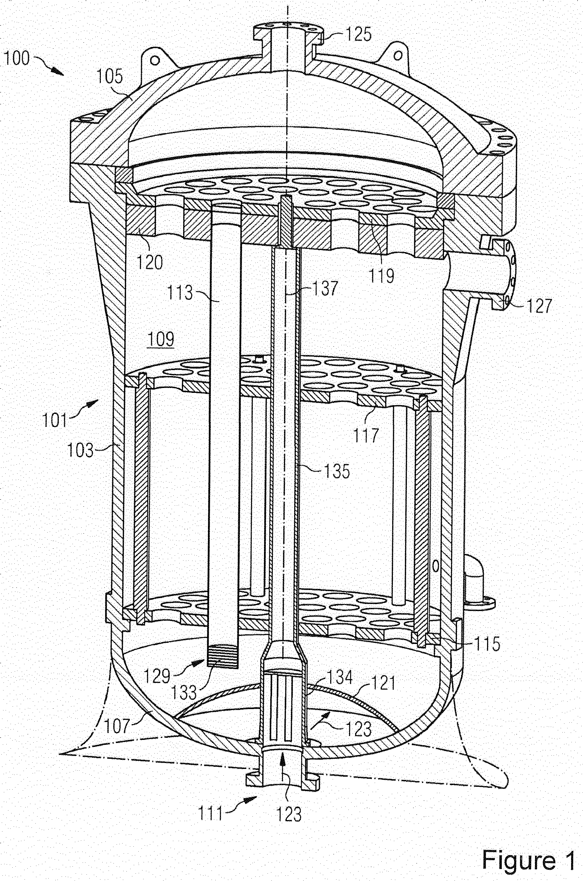

Within the vessel 101, the filter system 100 comprises a plurality of filter members 113 for filtering water, although only one is shown in Figure 1 (for clarity). Each filter element 113 has a longitudinal end 129, with a seal 133, and another longitudinal end 131 distal to the seal through which filtered water exits the filter member 113. The filter elements 113 pass through, and are supported by supporting plates 115, 117, 119, 120. Hence the filter elements 113 sit in an open volume formed between the plates 115, 117.

The filter elements 113 will, in time, become at least partially blocked. Hence a cleaning process is required to restore the effectiveness of the filter elements 113.

Conventionally this may be achieved with a regular back wash process and periodic chemical cleaning. A traditional design will require filling, draining and chemical cleaning of the total volume of the vessel.

Hence a filter system which reduces the amount of time and materials used during a cleaning process, compared to a known design, is highly desirable.

### Summary

According to the present disclosure there is provided an apparatus as set forth in the appended claims. Other features of the invention will be apparent from the dependent claims, and the description which follows.

Accordingly there may be provided a filter assembly 200 for filtering fluid. The assembly 200 may comprise : a wall 203, 205, 207 which defines a chamber 209, the chamber 209 defining: an intake distribution region 250; a filtering region 252; and a filtered fluid outlet region 254. The filtering region 252 may be defined by a core member 260, and the core member 260 extends from the intake distribution region 250 towards the filtered fluid outlet region 254. The core member 260 may comprise a passage 262 which extends from a first side 264 of the core member 260, which faces the intake distribution region 250, to the second side 266 of the core member 260, which faces the filtered fluid outlet region 254. A filter element 213 for filtering fluid may be mounted in the core member passage 262.

An internal surface 270 of the core member passage 262 may be substantially continuous along its extent from the first side 264 of the core member 260 to the second side 266 of the core member 260.

The filter element 213 may extend along at least part of the length of the passage 262.

A clearance 272 may be provided between the internal surface 270 of the core passage. The filter element 213 may extend along substantially the full extent of the passage 262.

The core member 260 may comprise a plurality of passages 262 which each extend from the first side 264 of the core member 260 to the second side of the core member 260, a filter element 213 being provided in each of the passages 262.

The plurality of core member passages 262 may extend parallel to one another.

The intake distribution region 250 may comprise a first port 211 in the wall of the chamber 209; and the filtered fluid outlet region 254 comprises a second port 225 in the wall of the chamber 209.

The filter assembly 200 may further comprise : a support member 235 which extends from the chamber wall 203; and carries the core member 260.

The support member 235 may extend through the core member 260.

The filter assembly 200 may further comprise a support plate 220 mounted from the chamber wall 203 in the filtered fluid outlet region 254; wherein the support member 235 extends through the core member 260 to engage with the support plate 220; and the filter element 213 extends between the core member 260 and a support plate aperture 280 in the support plate 219, 220 to define a flow passage between the filtering region 252 and the filtered fluid outlet region 254.

The support member 235 may extends from the first port 211, and a fluid distribution structure 290 extends from the support member 235 towards the first side of the core member 260.

The fluid distribution structure 290 may comprise a fluid distribution wall 292 comprising a plurality of apertures 294; sides of the distribution wall 292 diverge from the inlet port 211 to define a plenum 296, and the fluid distribution structure 290 may extend across the first side 264 of the core member 260.

The support member 235 may define a fluid flow passage 298 between the first port 211 and the plenum 296 of the fluid distribution structure 290.

The fluid distribution structure 290, core member 260 and support plate 219, 220 may be provided in series along the support member 235, the fluid distribution structure 290 being adjacent to the first side 264 of the core member 260; and the support plate 220 being adjacent to the second side 266 of the core member 260.

The fluid distribution structure 290 is spaced apart from the first side 264 of the core member 260; and the support plate 220 is spaced apart from the second side 266 of the core member 260.

Hence there is provided a filter system configured to reduce the amount of time regular backwash, periodic chemical cleaning and materials used to during a cleaning process. The core member (which may be termed a "high efficiency member") fills a high proportion of the vessel volume, which means liquid filling and drain time will be reduced. Consequently, a smaller volume of cleaning fluid may also be used, saving cost of supplying and safely disposing of the chemicals.

Additionally the structure including the core member ("high efficiency member") is a more simple design compared to designs of the related art, thereby inherently being more cost efficient , easier to manufacture, and reducing the number of parts making the overall design more rigid.

### Brief Description of the Drawings

Examples of the present disclosure will now be described with reference to the accompanying drawings, in which:
Figure 2 shows a schematic representation of a filter system including a filter assembly according to the present disclosure;
Figure 3 shows sectional view of filter assembly according to the present disclosure; and
Figures 4, 5 show enlarged views of opposite ends of the filter assembly shown in Figure 3.

### Detailed Description

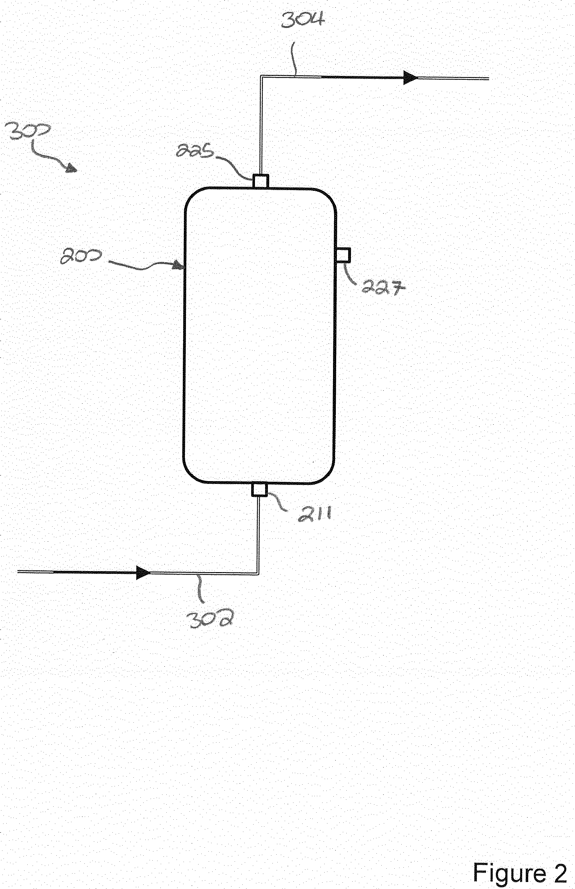

Figure 2 shows a filter system 300 comprising a filter assembly 200 according to the present disclosure. The filter system 300 comprises a first fluid conduit 302 in fluid communication with, and coupled to, a first port 211 on the filter assembly 200. The filter system 300 further comprises a second fluid conduit 304 in fluid communication with, and coupled to, a second port 225 on the filter assembly 200.

During a filtering mode of operation, fluid passes along the fluid conduit 302, through the first port 211 and into the filter assembly 200, where it is filtered as required. Filtered fluid then exits the filter assembly 200 via the second port 225 to the second fluid conduit 304.

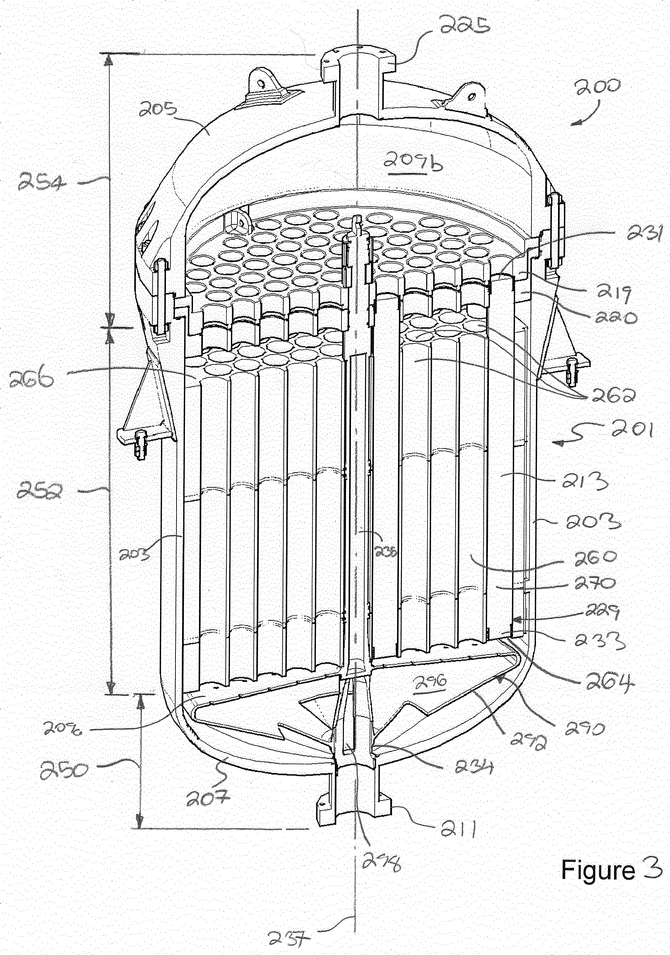

The filter assembly 200 is presented in more detail in Figures 3 to 5.

The filter assembly 200 for filtering fluid comprises a vessel 201 defined by a wall or number of walls which may comprise sidewall(s) 203, an upper wall 205 and a lower wall 207 which define (i.e. enclose) a chamber (i.e. internal space) 209, which is divided into sub chambers 209a, 209b. The chamber 209 defines, in series, an unfiltered region (i.e. sub chamber 209a) comprising an intake distribution region 250 and filtering region 252, and a sub chamber 209b comprising filtered fluid outlet region 254.

The filtering region 252 is defined by a core member 260, which extends from the intake distribution region 250 towards, but may not extend all the way to, the filtered fluid outlet region 254.

The core member 260 comprises a passage 262 which extends from a first side 264 of the core member 260, which faces the intake distribution region 250, to the second side 266 of the core member 260, which faces the filtered fluid outlet region 254. An internal surface 270 of the core member passage 262 is substantially continuous along its extent from the first side 264 of the core member 260 to the second side 266 of the core member 260.

The filter assembly 200 further comprises a filter element 213 for filtering fluid mounted in the passage 262.

The core member 260 may, as shown in the figures, comprise a plurality of passages 262 which each extend from the first side 264 of the core member 260 to the second side of the core member 260, a filter element 213 being provided in each of the passages 262.

The plurality of core member passages 262 may extend parallel to one another.

The structure of the core member 260 between the passages 262 may be solid.

The core member 260 extends between side wall(s) 203 of the chamber 209, as well as extending along the length of chamber 209. That is to say, the core member 260 extends along the length of chamber 209 and extends between opposite sides of the chamber 209, the sides defined by side wall(s) 203.

The core member 260 may extend about one half of the length of the chamber 209 as a whole, and hence occupies about one half of the volume of the chamber 209 as a whole, between the intake distribution region 250 and the filtered fluid outlet region 254.

Alternatively the core member 260 may extend about two thirds of the length of the chamber 209 as a whole, and hence occupy about two thirds of the volume of the chamber 209 as a whole, between the intake distribution region 250 and the filtered fluid outlet region 254.

Alternatively, the core member 260 may extend at least about one half of the length of the chamber 209 as a whole, and hence occupies about one half of the volume of the chamber 209 as a whole, between the intake distribution region 250 and the filtered fluid outlet region 254, but extends no more than about two thirds of the length of the chamber 209 as a whole, and hence no more than two thirds of the volume of the chamber 209 as a whole, between the intake distribution region 250 and the filtered fluid outlet region 254.

A clearance 272 is provided between the internal surface 270 of the core passage 262 and the filter element 213 along substantially the full extent of the passage 262. By way of non-limiting example, the clearance between the filter element 213 the core surface 270 may be about 2mm. By way of a further non-limiting example, the clearance between the filter element 213 the core surface 270 may be no less than 0.5 mm and no more than 5mm.

The or each filter element 213 extends along at least part of the length of the passage 262. The or each filter element 213 may extend along the whole length the passage 262. The or each filter element 213 may extend out of at least one end of the passage 262.

A large number of filter elements 213, and hence passages 262, may be provided, for example 60 to 150 filter elements, in particular 60 or 108 filter elements.

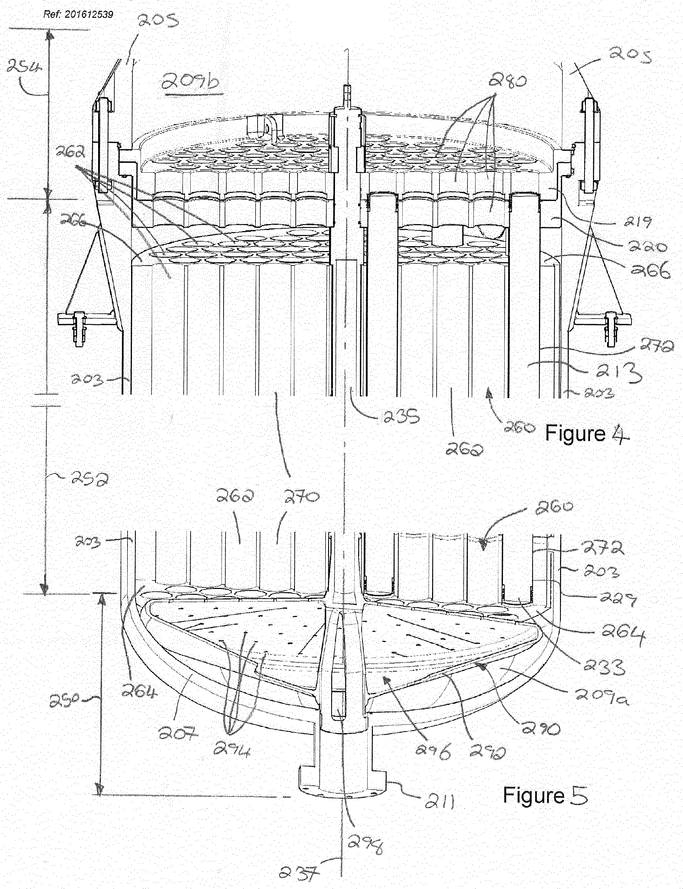

The or each filter element 213 has a longitudinal end 229 (at the nominal bottom end, as shown in figures 3, 5) and has another longitudinal end 231 (at the nominal top end, as shown in figures 3, 4). The longitudinal end 229 comprises a seal 233.

Although not shown in the drawings, the filter elements 213 may comprise a plurality of filter strands (also called straws) which are arranged side by side. The bundle of straws may also termed a membrane element. Each of the filter straws comprises a tube having fine pores, allowing fluid to enter an inside channel of the tube but preventing particles having a size larger than a threshold size to enter the tube.

The bottom (or "first" or "inlet") port 211 defines a fluid flow passage. That is to say, the intake distribution region 250 comprises the first port 211 in the wall of the chamber 209.

The filter assembly 200 further comprises the top (or "second" or "outlet") port 225 for allowing filtered fluid to leave the vessel 203 when the system 200 is operated in a filtering mode or cleaning mode. That is to say the filtered fluid outlet region 254 comprises the second port 225 in the wall of the chamber 209.

The filter assembly 200 further comprises a support plate 220 (which may be provided as layered plates 219, 220, as shown in Figures 3, 4) which define passages 280 through which filtering fluid passes as it exits the filter elements 213. The support plate 220 is mounted from the chamber wall 203 in the filtered fluid outlet region 254.

The filter element 213 extends between the passage 262 in the core member 260, in which it is located, and a support plate aperture 280 in the support plate 219, 220, such that the filter element 213 defines a flow passage between the filtering region 252 and the filtered fluid outlet region 254.

A support member 235 extends from the chamber wall, for example wall 207, and carries the core member 260. The support member 235 extends through the core member 260. Additionally, and as shown, the support member 235 extends through the core member 260 to engage with the support plates 219, 220.

The support member 235 may extend from the first port 211. The support member 235 is provided along a central longitudinal axis 237 (i.e. along the length) of the chamber 209.

A fluid distribution structure 290 extends from the support member 235 towards the first side 264 of the core member 260. The fluid distribution structure 290 is located in the intake distribution region 250.

The fluid distribution structure 290 comprises a fluid distribution wall 292 comprising a plurality of apertures 294, and sides of the fluid distribution wall 292 diverge from the inlet port 211 to define a plenum 296. The wall which defines the fluid distribution structure 290 extend so that the fluid distribution structure 290 extends across (i.e. spans) the first side 264 of the core member 260. The fluid distribution structure 290 is configured to distribute fluid introduced via the port 211 for reaching the filter elements 213.

The support member 235 defines a fluid flow passage 298 between the first port 211 and the plenum 296 of the fluid distribution structure 290. The flow passage 298 may be operable as a fluid injector to deliver fluid to the plenum 296 of the fluid distribution structure 290. The support member 235 may be solid over its length which extends through the core member 260, and may also be solid over its length which extends from the core member 260 to the filtered fluid outlet region 254.

The fluid distribution structure 290, core member 260 and support plate 219, 220 are provided in series along the support member 235. The fluid distribution structure 290 is adjacent to the first side of the core member 260, and the support plate 220 is adjacent to the second side of the core member 260.

The fluid distribution structure 290 is spaced apart from the first side 264 of the core member 260, and the support plate 220 is spaced apart from the second side 266 of the core member 260. As can be seen from figures 3 to 5, no other structure is provided between the core member 260 and support plate 219, 220, nor between the core member 260 and fluid distribution structure 290. That is to say the fluid distribution structure 290 is spaced apart from the first side 264 of the core member 260 by a clearance gap, and the support plate 220 is spaced apart from the second side 266 of the core member 260 by another clearance gap. The filter elements 213 are supported only by the core member 260 and plates 219, 220.

As shown in Figure 2, the vessel 201 further comprises a third (or "side") port 227 which provides a fluid flow aperture, allowing fluid to enter and leave the vessel. The third port is provided in the wall of the vessel 201 between the second side 266 of the core member 260 the support plate 219, 220.

As set out above, the filter assembly 200 is configured for filtering fluid. In particular the filter assembly is configured for filtering a liquid, and in particular water, and other fluids consisting at least in part of water.

The filter system of the present disclosure has two modes of operation, a filtering mode and a cleaning mode.

In a filtering mode, where fluid is being filtered, unfiltered (e.g. contaminated) fluid is passed along the conduit 302 through the inlet port 211 into the filter assembly 200. The unfiltered fluid passes into intake distribution region 250 and in part passes around the fluid distribution section 290 and in part passes into the plenum 296 of the fluid distribution section 290 such that some of the unfiltered fluid passes around the outside of the wall 292 of the plenum 296 and some passes through the apertures 294 in the wall 292 of the fluid distribution section 290. The unfiltered fluid then passes along the clearance 272 between the filter element 213 and the surface 270 of the core member passage 262. Fluid passes through the outer membrane of the filter element 213, thus becoming "filtered".

Particulates and other contaminates are prevented from passing through the outer membrane of the filter element 213 and remain on the outer surface of the filter element 213, or embedded in the outer membrane of the filter element 213.

The filtered fluid then passes along the filter element 213 in a direction towards the second side 266 of the core member 260, towards the support plate 219, 220 and exits the support plate apertures 280 to enter the filtered fluid outlet region 254. The filtered fluid then exits the filter assembly 200 through the second port 225 to travel along the conduit 304.

Hence the fluid enters the intake distribution region 250, passes through the filtering region 252 and exits via the filtered fluid outlet region 254.

In this way, the intake distribution region 250 and filtering region 252 consequently become polluted with particulates and other contaminates from the unfiltered fluid. In particular the outer membrane of the filtering elements 213 may become blocked, reducing the filtering efficiency of the filter assembly 200.

In the second mode of operation, the cleaning mode, the sub chamber 209a is partly filled (or partly drained) such that it contains about 50% of its volumetric capacity. Air, or other gas, may then be directed through the inlet port 211. The gas passes around and through the fluid distribution structure 290 and is distributed by the outer wall 292 and the apertures 294 of the fluid distribution structure 290. Hence there is achieved an even distribution of gas bubbles passing through the intake distribution region 250. This injection of gas bubbles into the fluid already present in the sub chamber 209a provides significant agitation to loosen and therefore clean any particulates and other contaminates stuck to surfaces of the sub chamber 209a, surfaces of the passages 280 and the outer surface of the filter elements 213.

After sufficient agitation, the air/gas supply is removed, and the fluid is drained from the sub chamber 209a, removing particulates and other debris from the cleaning mode. Cleaning fluid may then be passed through the inlet port 211 to fill the sub chamber 209a. The cleaning fluid may be left to sit in the sub chamber 209a for a predetermined length of time until the cleaning process is complete, when the cleaning fluid is then drained through the first port 211. The sub chamber 209a may then be flushed through with fluid (e.g. water) to remove residual cleaning fluid.

During the above processes, the second port 225 and 227 will be opened and closed at appropriate stages in order to allow fluid to be pressed/forced from (upper) sub chamber 209b into (lower) sub chamber 209a to penetrate the filter element membranes 213 and help free any debris stuck in or on filter element membrane 213. That is to say, in the cleaning mode, fluid may be flowed from (upper) sub chamber 209b into (lower) sub chamber 209a to pass through the membranes of the filter element membranes 213 in a direction opposite to the direction of fluid flow during a filtering mode direction, thus helping to free any debris stuck in or on filter element membrane 213.

There is thus provided a filter system and filter assembly for cleaning a fluid, as well as a method of cleaning the filter system, and a method of cleaning the filter assembly.

The vessel/chamber 209 may be sizeable, for example having a capacity of several thousand litres. Since the core member 260 occupies a significant volume in the sub chamber 209a, the provision of the core member 260 results in a reduction of effective (i.e. working) volume of the sub chamber 209a. Hence during a cleaning process, there is less room in the sub chamber 209a for fluid for washing/agitation, less room for air, and less room for cleaning fluid than in a device of the related art (for example as shown in Figure 1). Hence the amount of material needed to clean the sub chamber 209a is substantially reduced because of the presence the core member 260. Since the effective volume is reduced relative to a device of the related art, the time required to clean the sub chamber 209a is also reduced -for example the time taken to fill and drain the vessel at different stages of the cleaning cycle is reduced.

For example, the filling and drain time may be reduced by 50% compared to the filling and drain times of example devices of the related art. Additionally the volume of cleaning fluid required may reduce by about 50%. Thus a smaller volume of cleaning fluid may also be used, saving cost of supplying and safely disposing of the cleaning fluid chemicals, which may have a significant environmental benefit.

For larger systems, the extra efficiency provided by the provision of the core member (e.g. reduced down time for cleaning) may also reduce the total amount of filter assemblies required as part of the system, reducing thereby reducing overall cost and space required to accommodate the filter assemblies.

Additionally the core member 260 removes the need for two separately manufactured support discs 117, 115 of the related art. Hence overall the structure of the filter assembly of the present disclosure is simplified relative to the related art.

A filter assembly 200 of the present disclosure, comprising the core member 260 is thus simpler to manufacture, assemble and maintain relative to devices of the related art, as well having environmental benefits. Hence a filter assembly comprising a core member 260 according to the present disclosure provides mechanical, functional and financial benefits compared to devices of the related art.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A filter assembly (200) for filtering fluid comprising :
a wall (203, 205, 207) which defines a chamber (209), the chamber (209) defining:
an intake distribution region (250);
a filtering region (252); and
a filtered fluid outlet region (254);
wherein the filtering region (252) is defined by a core member (260), and
the core member (260) extends from the intake distribution region (250) towards the filtered fluid outlet region (254);
the core member (260) comprising a passage (262) which extends from a first side (264) of the core member (260),
which faces the intake distribution region (250),
to the second side (266) of the core member (260),
which faces the filtered fluid outlet region (254); and
a filter element (213) for filtering fluid mounted in the core member passage (262).

2. A filter assembly (200) for filtering fluid as claimed in claim 1 wherein
an internal surface (270) of the core member passage (262) is substantially continuous along its extent from the first side (264) of the core member (260) to the second side (266) of the core member (260).

3. A filter assembly (200) for filtering fluid as claimed in claim 1 or claim 2 wherein
the filter element (213) extends along at least part of the length of the passage (262).

4. A filter assembly (200) for filtering fluid as claimed in claim 2 or claim 3 wherein
a clearance (272) is provided between the internal surface (270) of the core passage;
and
the filter element (213) extends along substantially the full extent of the passage (262).

5. A filter assembly (200) for filtering fluid as claimed in any one of claims claim 1 to 4 wherein
the core member (260) comprises a plurality of passages (262) which each extend from the first side (264) of the core member (260) to the second side of the core member (260),
a filter element (213) being provided in each of the passages (262).

6. A filter assembly (200) for filtering fluid as claimed in claim 5 wherein
the plurality of core member passages (262) extend parallel to one another.

7. A filter assembly (200) for filtering fluid as claimed in any one of claims claim 1 to 6 wherein
the intake distribution region (250) comprises a first port (211) in the wall of the chamber (209); and
the filtered fluid outlet region (254) comprises a second port (225) in the wall of the chamber (209).

8. A filter assembly (200) for filtering fluid as claimed in any one of claims 1 to 7 further comprising :
a support member (235) which extends from the chamber wall (203); and
carries the core member (260).

9. A filter assembly (200) for filtering fluid as claimed in claim 8, wherein :
the support member (235) extends through the core member (260).

10. A filter assembly (200) for filtering fluid as claimed in claim 1 wherein
the filter assembly (200) further comprises a support plate (220)
mounted from the chamber wall (203) in the filtered fluid outlet region (254);
the support member (235) extends through the core member (260) to engage with the support plate (220); and
the filter element (213) extends between the core member (260) and a support plate aperture (280) in the support plate (219, 220) to define a flow passage between the filtering region (252) and the filtered fluid outlet region (254).

11. A filter assembly (200) for filtering fluid as claimed in any one of claims 8 to 10 wherein :
the support member (235) extends from the first port (211), and
a fluid distribution structure (290) extends from the support member (235) towards the first side of the core member (260).

12. A filter assembly for filtering fluid as claimed in claim 11 wherein
the fluid distribution structure (290) comprises a fluid distribution wall (292) comprising a plurality of apertures (294);
sides of the distribution wall (292) diverge from the inlet port (211) to define a plenum (296), and
the fluid distribution structure (290) extends across the first side (264) of the core member (260).

13. A filter assembly (200) for filtering fluid as claimed in claim 12 wherein
the support member (235) defines a fluid flow passage (298) between the first port (211) and the plenum (296) of the fluid distribution structure (290).

14. A filter assembly (200) for filtering fluid as claimed in any one of claims 11 to 13 wherein
the fluid distribution structure (290), core member (260) and support plate (219, 220) are provided in series along the support member (235),
the fluid distribution structure (290) being adjacent to the first side (264) of the core member (260); and
the support plate (220) being adjacent to the second side (266) of the core member (260).

15. A filter assembly (200) for filtering fluid as claimed in claim 14 wherein :
the fluid distribution structure (290) is spaced apart from the first side (264) of the core member (260); and
the support plate (220) is spaced apart from the second side (266) of the core member (260).
